# EUROPÄISCHE PATENTSCHRIFT

(11) **EP 0 547 360 B1**
(45) Veröffentlichungstag und Bekanntmachung des Hinweises auf die Patenterteilung: **13.03.1996**
(21) Anmeldenummer: 92119019.5
(22) Anmeldetag: 06.11.1992
(51) Int. Cl.: H02K 9/00

(54) **Rotor einer elektrischen Maschine mit einer Erregerstromzuleitung**
Rotor of an electric machine with a supply conductor for the excitation current
Rotor d'une machine électrique avec un conducteur d'alimentation pour le courant d'excitation

(30) Priorität: 18.12.1991 DE 4141690
(43) Veröffentlichungstag der Anmeldung: 23.06.1993
(73) Patentinhaber: ASEA BROWN BOVERI AG, CH-5401 Baden (CH)
(72) Erfinder: Haditsch, Werner, CH-5415 Nussbaumen (CH)
(74) Vertreter: Hetzer, Hans Jürgen

(56) Entgegenhaltungen:
- DE-A- 2 943 006
- FR-A- 2 219 560
- FR-A- 2 298 216
- FR-A- 2 307 393
- US-A- 3 393 333

## Beschreibung

### TECHNISCHES GEBIET

Die Erfindung bezieht sich auf einen Rotor einer gasgekühlten elektrischen Maschine, insbesondere Turbogenerator, mit einer in Längsnuten am Aussenumfang des Rotorballens angeordneten Erregerwicklung, mit einer Erregerstromzuleitung zur Verbindung der zentral im Rotor in einer axialen Wellenbohrung verlaufenden Erregerleitung mit den Erregerwicklungsleitern im Wickelkopf des Rotors, mit einem forciert gekühlten Erregerzuleitungsbolzen, der in einer ersten radialen Wellenbohrung angeordnet und an seinem inneren Ende mit der genannten Erregerleitung und an seinem äusseren Ende ausserhalb der Rotorwelle über Verbindungsleiter mit den Leitern des Rotorwickelkopfes elektrisch und mechanisch verbunden ist, welcher Rotor eine Rotorkappe zur Abstützung des Wickelkopfs des Rotors aufweist, wobei der Rotorwickelkopfraum unterhalb der Rotorkappe durch im wesentlichen axial verlaufende Trennwände in Kalt- und Heissgaskammern unterteilt ist, durch welche von einem Ventilator gefördertes Kühlgas strömt.

Die Erfindung nimmt dabei Bezug auf einen Stand der Technik, wie er sich beispielsweise aus der CH-PS 586 966 ergibt.

### TECHNOLOGISCHER HINTERGRUND UND STAND DER TECHNIK

Bei Turbogeneratoren erfolgt die Führung der Erregerleitungen am Rotor zur Rotorwicklung im allgemeinen in einer zentralen Wellenbohrung. Die Leiter in der Wellenbohrung sind meist massiv und rundum isoliert. Von diesen zentral geführten Massivleitern wird die Verbindung zur Rotorwicklung über radial in die Massivleiter eingeschraubte Stromzuführungsbolzen hergestellt. Ein solcher Bolzen ist beispielsweise Gegenstand der CH-Patentschrift 586 966. Neben Bolzen aus Kupfer oder einer Kupferlegierung werden bei neueren Konstruktionen Bolzen aus hochfestem Stahl verwendet, welche dann forciert gekühlt werden müssen.

Der Bolzen liegt in einem Wellenabschnitt, der infolge der Wellendurchbiegung durch das Eigengewicht des Rotors und Unwuchtkräfte extrem hoch beansprucht ist. Durch eine (radiale) Bohrung in diesem Wellenabschnitt wird die Rotorwelle geschwächt. Im ungünstigsten Fall könnnen sich im Bereich der Bolzenbohrung Risse ausbilden, welche zur Havarie führen können.

Gegenstand der US-A-3 393 333 ist ebenfalls ein Rotor einer gasgekühlten elektrischen Maschine, bei der die in radialen Wellenbohrungen angeordneten Erregerleitungszuleitungsbolzen im Wellenabschnitt zwischen dem Rotorwickelkopf und einem auf der Welle befestigten Axialventilator liegen. Sie werden von einem Teilstrom des vom Axialventilators geförderten Kühlgases gekühlt, wobei dieser Teilstrom auch entlang der Erregerzuleitung geführt wird. Ein anderer Teilstrom strömt durch einen Hohlleiter, welcher die Verbindung zwischen den Erregerzuleitungsbolzen und der Erregerwicklung herstellt, unter den Rotorwicklekopf und von dort aus zum einen durch einen ersten Auslass in den Maschinenluftspalt, zum einen durch zweite Auslässe am äusseren Ende der Rotorkappe in den Rotoraussenraum.

### KURZE DARSTELLUNG DER ERFINDUNG

Der Erfindung liegt die Aufgabe zugrunde, die Erregerstromzuleitung zwischen den Massivleitern in der zentralen Wellenbohrung und dem eigentlichen Wicklungsanschluss am Rotorwickelkopf derart auszubilden, dass weder die Welle noch die elektrische Verbindung mechanisch gefährdet sind und eine wirksame Kühlung möglich ist.

Diese Aufgabe wird erfindungsgemäss dadurch gelöst, dass die besagten ersten Wellenbohrungen zur Aufnahme der Erregerstromzuführungsbolzen in je eine Heissgaskammer münden, und dass die die zentrale Wellenbohrung über im wesentlichen radial verlaufende zweite Wellenbohrungen mit den Kaltgaskammern in Verbindung stehen, so dass Kühlgas von den Kaltgaskammern durch die zweiten radialen Wellenbohrungen, die axiale Wellenbohrung und durch die ersten radialen Wellenbohrungen strömt.

Vorzugsweise sind dabei die ersten radialen Wellenbohrungen gegenüber den zweiten radialen Wellenbohrungenm in Umfangsrichtung versetzt, und die zweiten radialen Wellenbohrungen sind bevorzugt im Bereich der Uebergangsstelle von der Welle zum Rotorballen angeordnet und münden in einen Raum in der Mitte der Rotorwelle. In diesem Bereich können diese Bohrungen ohne Gefährdung des Rotors eingebracht werden. Besonders günstig ist es, wenn die zweiten radialen Wellenbohrungen von den (vorhandenen) Wicklungsnuten nahe der Polmitte ausgehen. Zu diesem Zweck sind die Enden der betreffenden Nuten zur Rotorachse hin in der Art einer Grundnut erweitert.

Ein Ausführungsbeispiel der Erfindung sowie die damit erzielbaren Vorteile wird nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen vereinfachten Längsschnitt im Bereich des Erregerzuleitungsbolzens durch den Wickelkopf des Rotors eines Turbogenerators;
- Fig.2: einen Ausschnitt einer Draufsicht auf den Wickelkopf gemäss Fig.1;
- Fig.3: eine Ansicht des unbewickelten Rotors von der Nicht-Antriebsseite her;
- Fig.4: einen vereinfachten Längsschnitt im Bereich der zweiten radialen Wellenbohrung des Turbogenerators gemäss Fig.1 bzw. 3.

### WEGE ZUR AUSFÜHRUNG DER ERFINDUNG

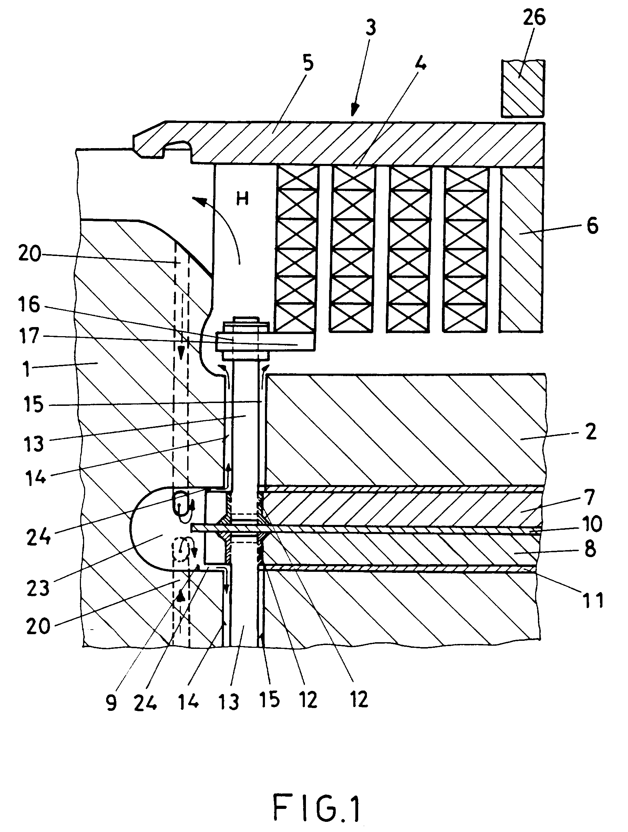

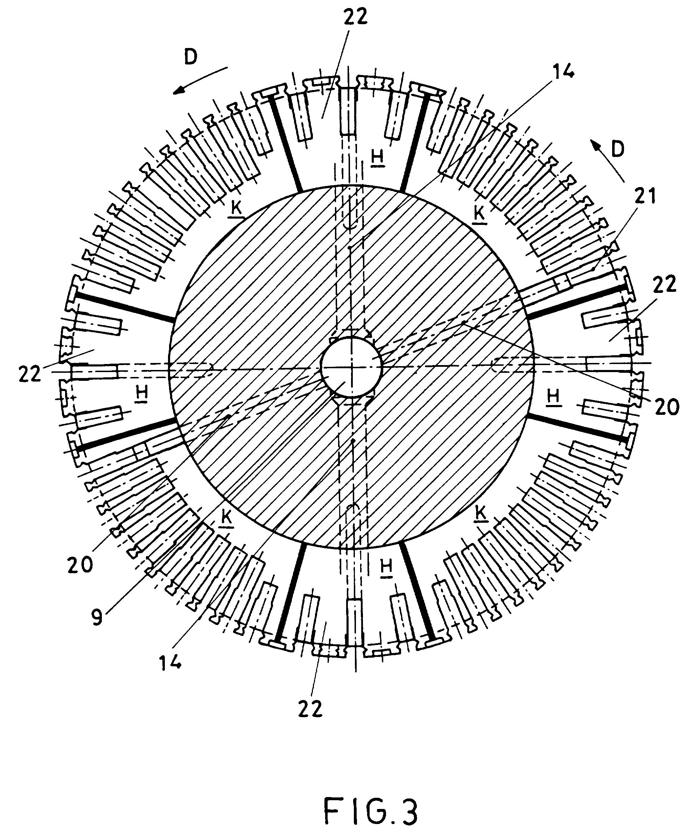

Im Längsschnitt durch den NS-Wickelkopf des Rotors eines Turbogenerators nach Fig.1 ist mit 1 der Rotorballen, mit 2 die Rotorwelle bezeichnet. Im Rotorwickelkopf 3 sind in bekannter Weise die als Hohlleiter ausgeführten Rotorwicklungsleiter 4 miteinander verschaltet. Eine Rotorkappe, bestehend aus Kappenring 5 und Kappenplatte 6 dient zur Abstützung des Rotorwickelkopfs 3.

Die Zuführung des Erregerstroms zur Erregerwicklung erfolgt über Massivleiter 7,8, die in einer axial verlaufenden zentralen Wellenbohrung 9 in der Rotorwelle 2 vorgesehen ist. Die Massivleiter 7,8 sind gegeneinander durch eine Isolierzwischenlage 10 elektrisch isoliert. Ein in die Wellenbohrung 9 eingesetztes Isolierrohr 11 dient zur Isolation der Massivleiter 7,8 gegenüber der Rotorwelle 2.

Am wickelkopfseitigen Ende sind beide Massivleiter 7,8 mit einer radialen Bohrung versehen, in die je ein Gewindeeinsatz 12 eingebracht ist. In Gewindeeinsätze 12 ist je ein Erregerzuleitungsbolzen 13 eingeschraubt, der in einer ersten radialen Wellenbohrung 14 angeordnet ist. Sein Aussendurchmesser ist kleiner als die lichte Weite des ersten radialen Wellenbohrung 14, so dass ein Kühlspalt 15 entsteht, durch den ein Kühlgas geleitet werden kann. Anstelle eines Kühlspaltes 15 kann auch der Bolzen 13 teilweise hohl ausgeführt werden. Das radial äussere Ende des Erregerzuleitungsbolzens 13 ist mit einem Gewinde 16 versehen, auf dem ein Verbindungsleiter 17 zur elektrischen Verbindung des Erregerzuleitungsbolzens 13 mit den Rotorwicklungsleitern 4 des Wickelkopfes 3 befestigt ist.

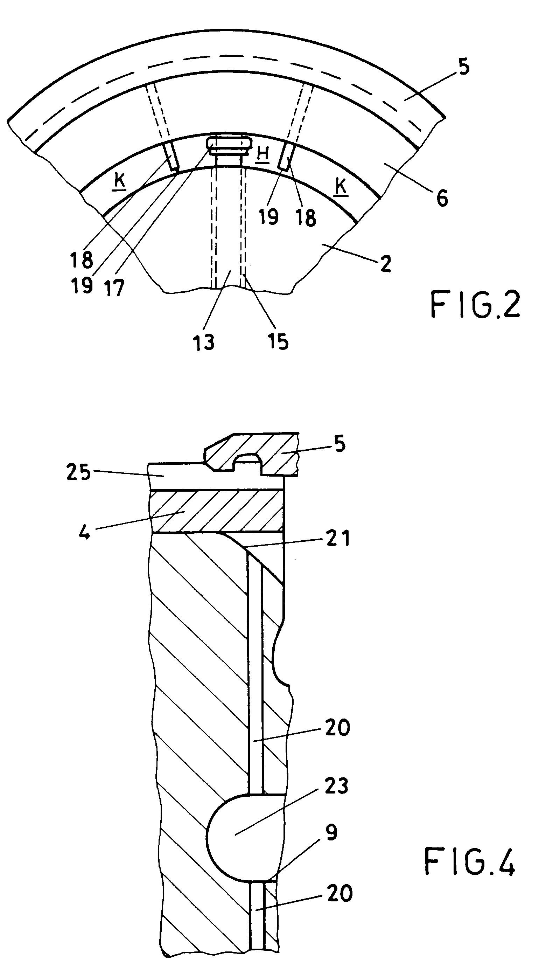

Wie aus Fig.2 hervorgeht, ist der Rotorwickelkopfraum unter dem Kappenring 5 durch axial verlaufende Trennwände 18 in mehrere Heissgaskammern H (nur eine davon in Fig.2 sichtbar) und Kaltgaskammern K unterteilt. Diese reichen unter Belassung eines kleinen Spalts 19 bis zur Welle 2. Axial sind diese Kammern begrenzt durch die Kappenplatte 6 bzw. den Rotorballen 1.

Vom (nicht eingezeichneten) Maschinenlüfter strömt Kaltgas in die Kaltgaskammern K, tritt in seitliche Oeffnungen in den hohlen Wicklungsleitern 4 in diese ein, durchströmt diese und verlässt diese (bei beidseitig belüfteten Maschinen auf der entgegengesetzten Rotorseite) über die Heissgaskammern H in den Maschinenluftspalt. Das Kühlgas strömt ebenfalls von den Kaltgaskammern K in seitliche Oeffnungen in hohle Wicklungsstäbe, die in den in Fig.3 eingezeichneten Rotornuten angeordnet sind, durchströmt diese in verlässt diese Mitte Rotor in den Maschinenluftspalt.

Erfindungsgemäss wird nun ein Teil des Kaltgases zur Kühlung des Erregerzuleitungsbolzens 13 abgezweigt. Zu diesem Zweck ist gemäss Fig.4 im Rotorballen eine zweite radiale Wellenbohrung 20 vorgesehen, die von einer Rotornut 21 ausgeht, die der Heissgaskammer H und damit der Polmitte 22 benachbart ist, und in der axialen Wellenbohrung 9 endet, und zwar in dem Raum 23 zwischen dem Grund der axialen Wellenbohrung 9 und den Massivleitern 7,8. Die Rotornut 21 ist am Ballenende in der Art einer Grundnut erweitert. Der Raum 23 steht über Kanäle 24 mit dem Kühlspalt 15 in Verbindung, z.B. durch entsprechende Ausnehmungen in den Enden der Massivleiter 7 und 8 oder kurze Schlitze in dem Isolierrohr 11. Der Vollständigkeit halber ist in Fig.4 auch der Nutverschluss 25 für die Rotowicklung und eine Luftspaltblende 26 eingezeichnet. Letztere verhindert in bekannter Weise, dass das von Maschinenlüfter geförderte Kühlgas direkt in den Maschinenluftspalt strömt.

In den Kaltgaskammern steht frisches Kühlgas mit etwa Ventilatordruck zu Verfügung. Die radiale Lage von Gaseintritt in die zweiten radialen Wellenbohrungen 20 und Gasaustritt aus den ersten radialen Wellenbohrungen 14 wirkt zudem infolge Zentrifugalkräften zusätzlich kühlmittelfördernd. Versetzt man zusätzlich, wie in Fig.3 verdeutlicht, die zweiten radialen Wellenbohrungen 20 in Umfangsrichtung gegen die (durch Pfeile D symbolisierte) Drehrichtung des Rotors so, dass sie in Drehrichtung gesehen am Ende des Kaltgaskammer K zu liegen kommen, wirkt zusätzlich kühlmittelfördernd der Staudruck.

Die im vorstehenden beschriebenen Massnahmen zur forcierten Kühlung der Erregerzuleitungsbolzen wurden beispielhaft an einem vierpoligen Turbogenerator beschrieben. Sie sind, ohne den durch die Erfindung gesteckten Rahmen zu verlassen, auch bei zweipoligen Maschinen durchführbar.

## Patentansprüche

1. Rotor einer gasgekühlten elektrischen Maschine, insbesondere Turbogenerator, mit einer in Längsnuten (21) am Aussenumfang des Rotorballens (1) angeordneten Erregerwicklung (3), mit einer Erregerstromzuleitung zur Verbindung der zentral im Rotor in einer axialen Wellenbohrung (9) verlaufenden Erregerleitung (7,8) mit den Erregerwicklungsleitern (4) im Wickelkopf (3) des Rotors, mit einem forciert gekühlten Erregerzuleitungsbolzen (13), der in einer ersten radialen Wellenbohrung (14) angeordnet und an seinem inneren Ende mit der genannten Erregerleitung (7,8) und an seinem äusseren Ende ausserhalb der Rotorwelle (2) über Verbindungsleiter (17) mit den Leitern (4) des Rotorwickelkopfes elektrisch und mechanisch verbunden ist, welcher Rotor eine Rotorkappe (5,6) zur Abstützung des Wickelkopfs (3) des Rotors aufweist, wobei der Rotorwickelkopfraum unterhalb der Rotorkappe durch im wesentlichen axial verlaufende Trennwände in Kalt- (K) und Heissgaskammern (H) unterteilt ist, durch welche von einem Ventilator gefördertes Kühlgas strömt, dadurch gekennzeichnet, dass die besagten ersten Wellenbohrungen (14) zur Aufnahme der Erregerstromzuführungsbolzen (13) in je eine Heissgaskammer (H) münden, und dass die zentrale Wellenbohrung (9) über im wesentlichen radial verlaufende zweite Wellenbohrungen (20) mit den Kaltgaskammern (K) in Verbindung stehen, so dass Kühlgas von den Kaltgaskammern (K) durch die zweiten radialen Wellenbohrungen (20), die axiale Wellenbohrung (9) und durch die ersten radialen Wellenbohrungen (14) strömt.

2. Rotor nach Anspruch 1, dadurch gekennzeichnet, dass die ersten radialen Wellenbohrungen (14) gegenüber den zweiten radialen Wellenbohrungen (20) in Umfangsrichtung versetzt sind.

3. Rotor nach Anspruch 1 oder 2, dadurch gekennzeichnet, dass die zweiten radialen Wellenbohrungen im Bereich der Uebergangsstelle von der Welle (2) zum Rotorballen (1) angeordnet sind und in einen Raum (23) in der Mitte des Rotors münden.

4. Rotor nach Anspruch 3, dadurch gekennzeichnet, dass die zweiten radialen Wellenbohrungen (20) von Nuten (21) ausgehen, die an die Polmitte (22) des Rotors angrenzen oder zumindest benachbart sind.

5. Rotor nach einem der Ansprüche 1 bis 4, dadurch gekennzeichnet, dass der Erregerzuleitungsbolzen (13) entweder mit einer in Bolzenlängsrichtung verlaufenden Kühlbohrung versehen ist und/oder zwischen ihm und der Wandung der ersten radialen Wellenbohrung ein Kühlspalt (15) vorgesehen ist.

## Claims

1. Rotor of a gas-cooled electrical machine, especially a turbogenerator, having an excitation winding (3) arranged in longitudinal slots (21) on the outer circumference of the rotor body (1), having an excitation current supply line for connection of the excitation line (7, 8), which runs centrally in the rotor in an axial shaft hole (9), to the excitation winding conductors (4) in the winding overhang (3) of the rotor, having a forced-cooled excitation supply line bolt (13), which is arranged in a first radial shaft hole (14) and is connected electrically and mechanically at its inner end to the said excitation line (7, 8), and at its outer end, outside the rotor shaft (2), via connecting conductors (17) to the conductors (4) of the rotor winding overhang, which rotor has a rotor cap (5, 6) to support the winding overhang (3) of the rotor, the rotor winding overhang space being split underneath the rotor cap by separating walls, which run essentially axially, into cold gas chambers (K) and hot gas chambers (H), through which cooling gas, conveyed by a fan, flows, characterized in that the said first shaft holes (14) for holding the excitation current supply line bolts (13) open into in each case one hot gas chamber (H), and in that the central shaft hole (9) are [sic] connected via second shaft holes (20), which run essentially radially, to the cold gas chambers (K), so that cooling gas flows from the cold gas chambers (K) through the second radial shaft holes (20), the axial shaft hole (9) and through the first radial shaft holes (14).

2. Rotor according to Claim 1, characterized in that the first radial shaft holes (14) are offset in the circumferential direction with respect to the second radial shaft holes (20).

3. Rotor according to Claim 1 or 2, characterized in that the second radial shaft holes are arranged in the region of the transition point from the shaft (2) to the rotor body (1), and open into a space (23) in the centre of the rotor.

4. Rotor according to Claim 3, characterized in that the second radial shaft holes (20) originate from slots (21) which bound, or are at least adjacent to, the pole centre (22) of the rotor.

5. Rotor according to one of Claims 1 to 4, characterized in that the excitation supply line bolt (13) is either provided with a cooling hole running in the bolt longitudinal direction and/or a cooling gap (15) is provided between it and the wall of the first radial shaft hole.

## Revendications

1. Rotor d'une machine électrique à refroidissement à gaz, en particulier un turbo-alternateur, avec un bobinage d'excitation (3) disposé dans des rainures longitudinales (21) sur le pourtour extérieur du corps du rotor (1), avec une ligne d'arrivée de courant d'excitation destinée à raccorder la ligne d'excitation (7, 8) s'étendant au centre du rotor dans un alésage d'arbre (9) axial avec les conducteurs (4) du bobinage d'excitation dans la tête de bobine (3) du rotor, avec un boulon (13) de ligne d'arrivée d'excitation à refroidissement forcé, qui est disposé dans un premier alésage d'arbre (14) radial et qui est raccordé électriquement et mécaniquement à son extrémité interne avec ladite ligne d'excitation (7, 8) et à son extrémité externe en dehors de l'arbre (2) du rotor par le biais de conducteurs de raccordement (17) avec les conducteurs (4) de la tête de bobine du rotor, lequel rotor présente un capot de rotor (5, 6) destiné à supporter la tête de bobine (3) du rotor, l'espace pour la tête de bobine du rotor en dessous du capot du rotor étant divisé par des parois de séparation s'étendant essentiellement axialement dans des chambres à gaz froid (k) et chaud (H), à travers lesquelles passe un gaz de refroidissement amené par un ventilateur, caractérisé par le fait que lesdits premiers alésages d'arbre (14) destinés à recevoir les boulons (13) d'arrivée du courant d'excitation débouchent chacun dans une chambre à gaz chaud (H), et par le fait que l'alésage d'arbre (9) central est raccordé aux chambres à gaz froid (K) par l'intermédiaire de deuxièmes alésages d'arbre (20) s'étendant essentiellement radialement, de sorte que du gaz froid passe depuis les chambres à gaz froid (K), à travers les deuxièmes alésages d'arbre (20) radiaux, l'alésage d'arbre (9) axial et à travers les premiers alésages d'arbre (14) radiaux.

2. Rotor conforme à la revendication 1, caractérisé par le fait que les premiers alésages d'arbre (14) radiaux sont décalés dans le sens périphérique par rapport aux deuxièmes alésages d'arbre (20) radiaux.

3. Rotor conforme à la revendication 1 ou 2, caractérisé par le fait que les deuxièmes alésages d'arbre radiaux sont disposés dans la zone du point de transition de l'arbre (2) au corps du rotor (1) et débouchent dans un espace (23) au milieu de l'arbre du rotor.

4. Rotor conforme à la revendication 3, caractérisé par le fait que les deuxièmes alésages d'arbre (20) radiaux sortent de rainures (21) qui sont adjacentes ou au moins voisines du milieu des pôles (22) du rotor.

5. Rotor conforme à l'une des revendications 1 à 4, caractérisé par le fait que le boulon (13) de ligne d'arrivée d'excitation est muni d'un alésage de refroidissement s'étendant dans la direction longitudinale du boulon, et/ou une fente de refroidissement (15) est prévue entre lui et la paroi du premier alésage d'arbre radial.
